# EUROPEAN PATENT APPLICATION

(11) **EP 3 671 994 A1**
(43) Date of publication of application: **24.06.2020**
(21) Application number: 18215496.3
(22) Date of filing: 21.12.2018
(51) Int. Cl.: H02B 13/035

(54) **MEDIUM OR HIGH VOLTAGE SWITCHGEAR PANEL**

(71) Applicant: ABB Schweiz AG, 5400 Baden (CH)
(72) Inventor: Gentsch, Dietmar, 40882 Ratingen (DE); Reuber, Christian, 47877 Willich (DE)
(74) Representative: Maiwald Patent- und Rechtsanwaltsgesellschaft mbH

(57) **Abstract**

The present invention relates to a medium or high voltage switchgear panel (1). The medium or high voltage switchgear panel comprises at least one cable (30), and at least one current transformer (40). Each cable of the at least one cable passes through at least one hole through the at least one current transformer, wherein one cable of the at least one cable passes through the hole of a corresponding one current transformer of the at least one current transformer. At least one volume (50) between a surface of each cable of the at least one cable and a surface through each corresponding current transformer formed by the hole is at least partially filled with a foam or potting compound.

## Description

### FIELD OF THE INVENTION

The present invention relates to a medium or high voltage switchgear panel, a plate for a medium or high voltage switchgear panel, and a method of fixing components of a medium or high voltage switchgear panel.

### BACKGROUND OF THE INVENTION

Current carrying components in Medium Voltage (MV) and High Voltage (HV) switchgears have to be carefully fixed to avoid damage due to the high peak forces under short circuit conditions. A switchgear can be referred to as a switchgear unit or switchgear panel.
For example, several components of a switchgear panel are fixed individually to a frame of the switchgear panel. A gap exists between these components, for example between a cable and a current transformer (CT) around this cable. This gap exists because the end of the cable with its connector has a larger diameter than the cable itself, and this end has to be passed through the opening of the CT during the assembly of the switchgear.

There is a need to find an efficient means of fixing components to protect for example against peak forces under short circuit conditions.

### SUMMARY OF THE INVENTION

Therefore, it would be advantageous to have an improved medium or high voltage switchgear panel that has components that are efficiently fixed.

The object of the present invention is solved with the subject matter of the independent claims, wherein further embodiments are incorporated in the dependent claims.
In a first aspect, there is provided a medium voltage or high voltage switchgear panel, comprising:
- at least one cable; and
- at least one current transformer.
Each cable of the at least one cable passes through at least one hole through the at least one current transformer. One cable of the at least one cable passes through the hole of a corresponding one current transformer of the at least one current transformer. At least one volume between a surface of each cable of the at least one cable and a surface through each corresponding current transformer formed by the hole is at least partially filled with a foam or potting compound.
In other words, one or more current transformers of a MV or HV switchgear each has a hole through it, through which a cable passes. If there are more than one current transformer then a different cable passes through each current transformer. The hole through each transformer is larger than each cable that passes through each hole because the connecting end of each cable is wider than the cable. The transformer and the cable must be secured relative to one another. This is now achieved by filling the space between the cable and the current transformerof the MV or HV switchgear with constructive foam or potting compound to increase the mechanical stiffness of the fixation of current carrying components. In this manner, the required stiffness for withstanding the peak forces for example under short circuit conditions is provided and at the same time, other normal means of fixation of the current carrying components can then be reduced or omitted, whilst still achieving the required stiffness, thereby also leading to cost reductions in terms of components and assembly.

In an example, the hole through a current transformer of the at least one current transformer has two areas at two opposing sides of the current transformer. The two areas are formed between the current transformer and the cable at positions of the two opposing sides of the current transformer, and wherein at least one plate covers at least one area of the two areas.
In other words, at the outsides of the current transformer at the position where the cable enters and exits the current transformer one or more plates can cover one or both of the gaps around the cable at the positions where the cable enters and exits the current transformer. Thus, one side of a current transformer can have a plate or plates that covers the gap between the cable and the hole, or both sides of the current transformer can have a plate or plates that covers the gap between the cable and the hole at each side of the current transformer.
In this manner, the foam or potting compound is contained at the correct position, and the plates facilitate application or insertion of the foam or potting compound, ensuring that the foam or potting compound is located as required. Additionally, the plate(s) can enable a relatively flowable foam or potting compound to be used, that can be stopped from flowing outside of where it is required by the plate(s).

In an example, a first area of the two areas is covered by at least two plates. A first one of the at least two plates covers a first part of the first area and a second one of the at least two plates covers a second part of the first area.

In an example, the first one of the at least two plates covers half of the first area and the second one of the at least two plates covers the remaining half of the first area. Thus, the two plates can be arcuately shaped. Being half discs with a centre circular part missing that fits around the cable and an outer circular part that matches the hole through the current transformer. By making the plates in this manner, they can be identically formed providing for ease of manufacture.

In an example, the at least one plate comprises at least a part of a ring that extends at least partially into the hole through the current transformer.
In other words, the plate can have a portion shaped to an outside of the current transformer, for example being flat, that fits up against the current transformer around the cable and covering the space around the cable between the cable and the current transformer - there can then be more than one plate that act together to completely cover this gap between the cable and the current transformer and the cable formed by the hole through the current transformer. But then the plate has a partial ring shaped portion, for example a half circle in form in the plane of the plate but that also has a length that can be perpendicular to the flat portion of the plate. This partial ring then is inserted into the hole, when the plate is fitted around the cable to cover the hole, and helps to secure the plate in position.

In an example, the at least part of the ring comprises an outward facing flexible or elastic seal that forms a seal with at least part of the surface of the current transformer formed by the hole.

In an example, the at least part of the ring comprises an inward facing flexible or elastic seal that forms a seal with at least part of the surface of the cable.
In this manner, if the foam or potting compound is partially liquid in form, the seal contains the foam or potting compound in the space between the cable and the current transformer at the position of the hole and stops this from flowing elsewhere.

In an example, a second area of the two areas is covered by at least two plates. A first one of the at least two plates covers a first part of the first area and a second one of the at least two plates covers a second part of the first area. The second area is situated vertically above the first area. At least one of the two plates that cover the second area has at least one hole through which the foam or potting compound can be, or was, inserted to fill the volume.

In an example, at least one hollow tube is located within the foam or potting compound, and forms at least one conduit through the foam or potting compound.
In other words, a hollow tube that is open at both ends is provided through the foam or potting compound.
In this manner, fluid such as air, or other fluids such as a specific gas or a liquid can flow through the hollow tube and provide for cooling of the foam or potting compound.

In an example, the at least one hollow tube is integrated into one or more of the at least one plate.

In an example, at least one cutting wire is located within the foam or potting compound that fills the at least one hole, thereby enabling the foam or potting compound to be cut.

In an example, both ends of each wire of the at least one the cutting wire protrude out of the same end of the hole through a current transformer.
In this manner, an efficient and convenient means is provided to cut the foam or potting compound during disassembly, for example by pulling on the ends of the wire that then cuts through the foam or potting compound.

In an example, the at least one current transformer comprises a plurality of current transformers. At least one volume between facing sides of adjacent current transformers is at least partially filled with a foam or potting compound.
In this manner, the current transformers can be fixed relative to one another in a convenient manner, reducing the requirement for normal fixing and thereby reducing costs and assembly times.

In a second aspect, there is provided a plate for a medium or high voltage switchgear panel. At least one of these plate(s) is configured to cover at least one of at least two areas at opposing sides of a current transformer of a medium or high voltage switchgear. The at least two areas are formed when a cable passes through a hole through the current transformer. The two areas are formed between the current transformer and the cable at the positions of the two opposing sides of the current transformer.

In a third aspect, there is provided a method of fixing components of a medium or high voltage switchgear panel. The medium or high voltage switchgear panel comprises at least one cable and at least one current transformer. Each cable of the at least one cable passes through at least one hole through the at least one current transformer. One cable of the at least one cable passes through the hole of a corresponding one current transformer of the at least one current transformer. The method comprises: filling with a foam or potting compound at least one volume between a surface of each cable of the at least one cable and a surface through each corresponding current transformer formed by the hole.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Figs. 1-2 show examples of a MV or HV switchgear panel;
Fig. 3 shows a sectional view through a MV or HV switchgear panel;
Fig. 4 shows an example of a plate;
Fig. 5 shows cutting wires included in a foam or potting compound in the space between a cable and a current transformer through which the cable passes;
Fig. 6 shows hollow tubes included in a foam or potting compound in the space between a cable and a current transformer through which the cable passes, and
Fig. 7 shows hollow tubes integrated into an example of a plate.

### DETAILED DESCRIPTION OF EMBODIMENTS

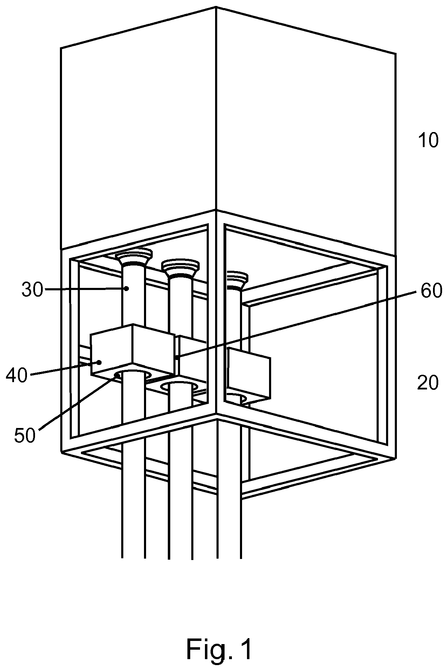

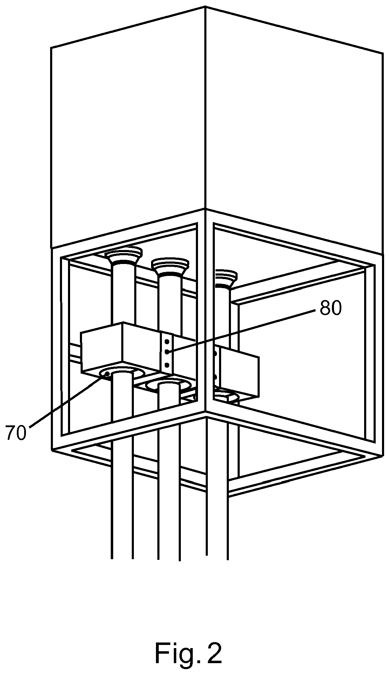

Figs. 1-7 show detailed examples of a MV or HV switchgear panel, with foam or potting compound being used to fix certain components. Means are provided to aid disassembly, and to aid cooling.
The figures show a medium voltage (MV) or high voltage (HV) switchgear panel 1. The MV or HV switchgear panel comprises at least one cable 30, and at least one current transformer 40. Each cable of the at least one cable passes through at least one hole through the at least one current transformer. One cable of the at least one cable passes through the hole of a corresponding one current transformer of the at least one current transformer. At least one volume 50 between a surface of each cable of the at least one cable and a surface through each corresponding current transformer formed by the hole is at least partially filled with a foam or potting compound.
In an example, the at least one volume 50 is filled with the foam or potting compound.

According to an example, the hole through a current transformer of the at least one current transformer has two areas at two opposing sides of the current transformer. The two areas are formed between the current transformer and the cable at positions of the two opposing sides of the current transformer. At least one plate 70 covers at least one area of the two areas. Thus, a single flexible plate with a centre circular hole and a slit from this centre hole extending to the outside can be twisted open and placed around the cable at the entrance to the current transformer. Or several separate plates can operate together and be placed at the entrance to the current transformer around the cable to close the area between the cable and the current transformer.
According to an example, a first area of the two areas is covered by at least two plates 70. A first one of the at least two plates covers a first part of the first area and a second one of the at least two plates covers a second part of the first area. Thus, two plates can operate together to cover the area, with one plate covering half of the area and the other plate covering the other half.

According to an example, the first one of the at least two plates covers half of the first area and the second one of the at least two plates covers the other half of the first area.
According to an example, the at least one plate 70 comprises at least a part of a ring 72 that extends at least partially into the hole through the current transformer.
According to an example, the at least part of the ring 72 comprises an outward facing flexible or elastic seal 73 that forms a seal with at least part of the surface of the current transformer formed by the hole.
According to an example, the at least part of the ring 72 comprises an inward facing flexible or elastic seal 73 that forms a seal with at least part of the surface of the cable.
According to an example, a second area of the two areas is covered by at least two plates 70. A first one of the at least two plates covers a first part of the first area and a second one of the at least two plates covers a second part of the first area. The second area is situated vertically above the first area. At least one of the two plates that cover the second area has at least one hole 74 through which the foam or potting compound can be, or was, inserted to fill the volume 50.
According to an example, at least one hollow tube 52 is located within the foam or potting compound, and forms at least one conduit through the foam or potting compound.
According to an example, the at least one hollow tube is integrated into one or more of the at least one plate.
According to an example, at least one cutting wire 90 is located within the foam or potting compound that fills the at least one hole, thereby enabling the foam or potting compound to be cut for disassembly in case of need.
According to an example, both ends of each wire of the at least one the cutting wire 90 protrude out of the same end of the hole through a current transformer.
According to an example, the at least one current transformer comprises a plurality of current transformers, and wherein at least one volume 60 between facing sides of adjacent current transformers is at least partially filled with a foam or potting compound.
In an example, the at least one volume 60 is filled with the foam or potting compound. In an example, at least one plate 80 covers at least one area between the adjacent current transformers.
In an example, a plate 80 can cover the bottom area between two adjacent current transformers and another plate 80 can cover the front area between those two adjacent current transformers. In an example, another plate can cover the top area between those two adjacent current transformers.
In an example, a single plate 80 can be bent to cover the bottom and front areas between two adjacent current transformers.
In an example, a single plate 80 can be bent to cover the bottom, front and top areas between two adjacent current transformers.
In an example, the plate 80 has two structures perpendicular to a plane of the plate 80 that extend into the gap between the two adjacent current transformers. One structure extends subtantailly parallel to a side of a first of the two current transformers and one structure extends substantially parallel to a side of a second of the two current transformers that faces the side of the first current transformer.
In an example, the two perpendicular structures have a flexible or elastic seal that faces towards the side of the current transformer to form a seal with the side of the current transformer.

As discussed above, the figures also show a plate 70 for a medium or high voltage switchgear panel. At least one plate is configured to cover at least one of at least two areas at opposing sides of a current transformer 40 of a medium or high voltage switchgear. The at least two areas are formed when a cable 30 passes through a hole through the current transformer. The two areas are formed between the current transformer and the cable at the positions of the two opposing sides of the current transformer.
In an example, a first one at least two plates is configured to cover a first part of a first area of the two areas and a second one of the at least two plates is configured to cover a second part of the first area.
In an example, the first one of the at least two plates is configured to cover half of the first area and the second one of the at least two plates is configured to cover half of the first area.
In an example, the at least one plate 70 comprises at least a part of a ring 72 that is configured to extend at least partially into the hole through the current transformer.
In an example, the at least part of the ring 72 comprises an outward facing flexible or elastic seal 73 that is configured to form a seal with at least part of the surface of the current transformer formed by the hole.

In an example, the at least one plate comprises at least one hole, where one or more of the at least one hole is configured to enable foam or potting compound to be injected through one or more hole.
In an example, the at least one plate comprises at least one hollow tube integrated into the at least one plate, wherein the at least one tube is configured to form a conduit through the hole through the current transformer.

A method of fixing components of a medium or high voltage switchgear panel 1 was used in assembly of the medium or high voltage switchgear. The medium or high voltage switchgear panel comprises at least one cable 30 and at least one current transformer 40. Each cable of the at least one cable passes through at least one hole through the at least one current transformer. One cable of the at least one cable passes through the hole of a corresponding one current transformer of the at least one current transformer. The method comprises filling with a foam or potting compound at least one volume 50 between a surface of each cable of the at least one cable and a surface through each corresponding current transformer formed by the hole.

Discussing Fig. 1 in more detail, this shows as an example a switchgear panel 1 with a compartment 10. At the lower end of the compartment, three cables 30 come out and go downwards. A current transforemer (CT) 40 is installed around each cable. All CTs are fixed onto a bar of the frame 20. In this example installation is at the rear side of the panel. The cables 30 have a connector at their upper end for insertion into the compartment 10. The diameter of this connector end is larger than the regular diameter of the cable at the location of the CT. As the cable has to be passed through the CT for the assembly of the switchgear, the inner opening of the CT 40 is larger than the regular diameter of the cable. Therefore, spaces 50 are created between each cable and its CT. Furthermore, spaces 60 are created between the neighbored CTs.
The spaces 50 and / or 60 are at least partly filled with constructive foam or potting compound to increase the mechanical stiffness of the fixation of the cables 30. Other means of fixation of the cable, that are normally used, can then be reduced or omitted to achieve the required stiffness for withstanding the peak forces under short circuit conditions. The constructive foam or spray foam or polyurethane foam or potting compound will fill most of the space 50, 60. The foam or potting compound will glue to the cables and the CTs and it will become a solid part that is able to bear mechanical forces. Depending on the type of constructive foam used, the surfaces of the spaces 50, 60 can be wetted with water in order to support the curing process of the foam or potting compound.

As shown in Fig, 2, for a clean filling of the spaces 50 and / or 60 the spaces 50, 60 are covered with plates 70, 80. These plates can for example be made of thermoplastic material with features for a mechanical latching at the desired location during the filling with the constructive foam or potting compound. Each plate 70 covers one half of the opening of the space 50, so that the plates 70 can be assembled around the cable 30. After the filling, the plates are also fixed by gluing to the constructive foam. The plates can be in other forms, such as each covering a third or quarter of the space 50, and indeed a flexible single plate with a slit from a centre hole to the edge can be twisted out of shape and positioned around a cable and then put back into a planar shape.

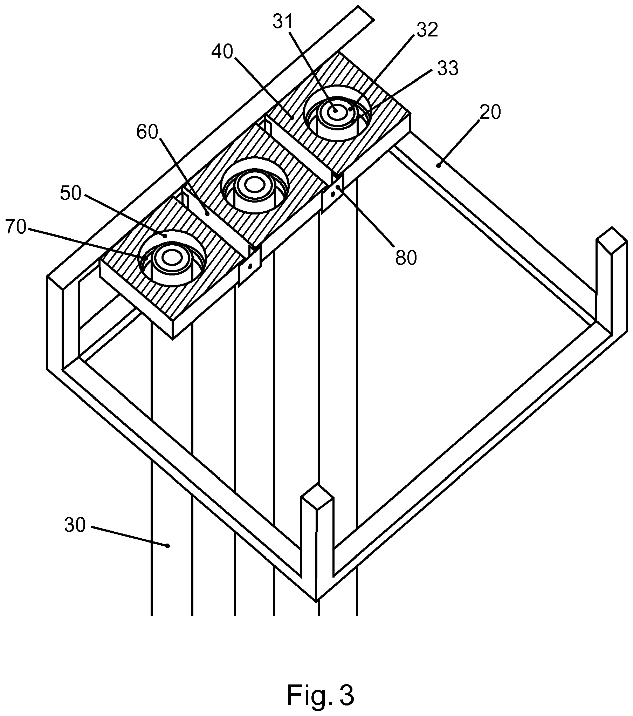

Fig. 3 shows in a sectional view the areas around the CTs 40. After application of constructive foam or potting compound to the spaces 50, 60, a solid block is created, including the cables 30, the CTs 40 and the frame 20.

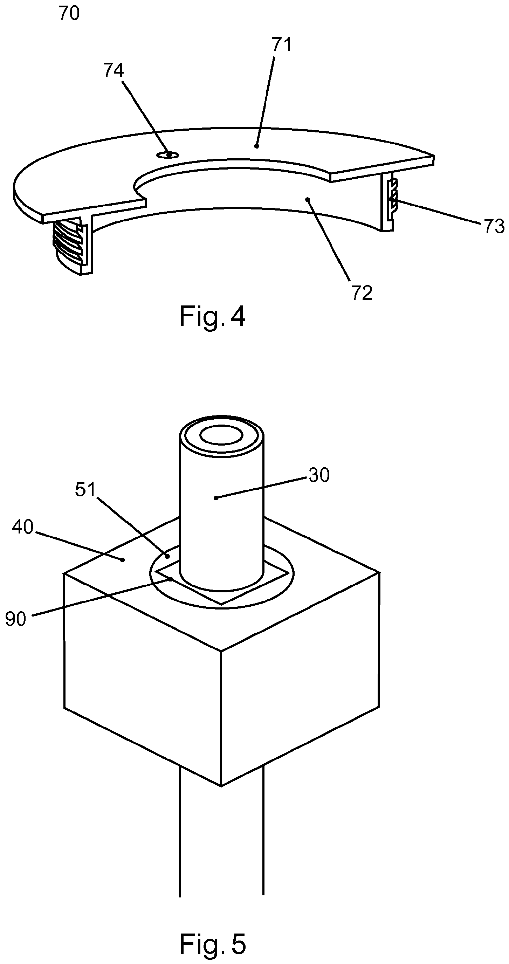

Fig. 4 shows an advantageous embodiment of the plate 70. It has the general shape of a semicircle so that two of these plates can be assembled around the cable 30. Plate 70 consists of a flat plate 71 to cover the space 50 and to rest on the CT 40. It further comprises a ring 72 for insertion and adjustment in the inner opening of the CT 40. In the embodiment shown, the ring 72 is equipped with a flexible or elastic sealing 73 to make sure that no filling material flows through the gap between the plate 70 and the CT 40. Furthermore, the flexibility of the sealing can compensate for mechanical tolerances. Another sealing could also be added at the inner opening of plate 70 to seal the plate 70 against the cable 30. A rigid plate 70 with one or more elastic sealings 73 can be generated in a 2-component moulding process, with an appropriate process described for example in EP2461338B1. Furtherore, the plate 70 comprises one or more openings 74 so that each space 50 has one or more openings for the insertion of the filling material and one or more openings for a controlled overrun of the filling material in case of need. The plate 80 can be designed accordingly, having the same features as the plate 70.

When the plates 70, 80 are being used with flexible sealings and the spaces 50 and / or 60 are sufficiently closed, filling with materials other than foams is facilitated and these other materials can also be used for obtaining a mechanically rigid structure.

Thus potting materials like silicone, epoxy, polyurethane (not as a foam here) or alike can be practically liquid when they are filled in the openings 74, and they will cure and glue to the involved surfaces. However, the plates now form a fluid tight seal and there is no flow out of the required region. The result will be a mechanically very solid structure. Therefore, openings 74 can be positioned in plates on the top end of the cavities in case of using a practically liquid potting material. When all involved components are practically on earth potential, there is no risk of partial discharges due to the described filling process.

For a disassembly of the CTs in case of need, the foam can be cut with a dedicated tool like an especially formed knife. It is also possible to drill two holes through the foam and then to pull a thin steel wire through a section of the foam for cutting this section, etc. Plates 70 can be mechanically removed.
However, as shown in Fig. 5, when the considered space that is filled with foam or potting compound of the switchgear is on earth potential, it is also possible to add such cutting wires before the application of the foam or potting material. Here, four cutting wires 90 are included in the foam or potting compound. When both ends of the wire are pulled from below, one fourth of the foam or potting compound is cut.

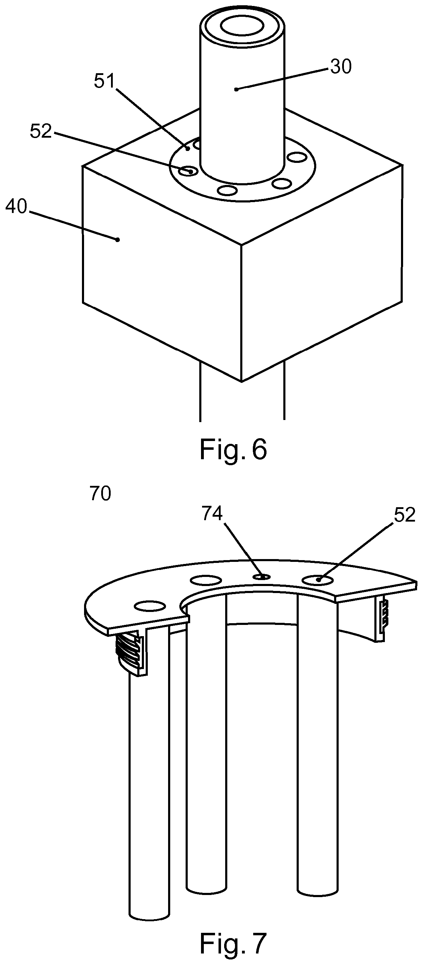

As shown in Fig. 6, for an improved transfer of heat from the region that is now filled with constructive foam or potting material, one or more tubes can be placed in this region. These tubes are generally empty, so that air can flow through the tubes and transport heat to the outside. This transport of heat can work more efficiently when the cable, CT and tubes are oriented vertically. In case the orientation of the cable and the CT has to be horizontally due to other constraints, the tubes can at least be placed inclined, using the available space, to allow for some natural ventilation. Additionally, additional means for the transfer of heat can be used with the tubes, such as metallic inserts, heat pipes and liquid cooling. From the manufacturing point of view, the tubes can be separate parts that are held in position by dedicated openings in the cover plates 70, 80 during the filling process. Alternatively, the tubes 52 can be integrated into the cover plates, as shown in Fig. 7.

### Reference numerals

1: Switchgear panel
10: Compartment
20: Frame
30: Cable
31: Inner conductor of cable
32: Insulation of cable
33: Outer earthed layer of cable
40: CT
50: Space between CT and cable
51: Space filled with foam or potting compound
52: Tubes for cooling
60: Space between CTs
70: Cover plate for 50
71: Flat plate to cover the space 50 and to rest on 40
72: Ring to be inserted into the opening of 40
73: Optional sealing
74: Opening
80: Cover plate for 60
90. Cutting wire

## Claims

1. A medium or high voltage switchgear panel (1), comprising:
- at least one cable (30); and
- at least one current transformer (40);
wherein, each cable of the at least one cable passes through at least one hole through the at least one current transformer, wherein one cable of the at least one cable passes through the hole of a corresponding one current transformer of the at least one current transformer;
wherein, at least one volume (50) between a surface of each cable of the at least one cable and a surface through each corresponding current transformer formed by the hole is at least partially filled with a foam or potting compound.

2. Medium or high voltage switchgear panel according to claim 1, wherein the hole through a current transformer of the at least one current transformer has two areas at two opposing sides of the current transformer, wherein the two areas are formed between the current transformer and the cable at positions of the two opposing sides of the current transformer, and wherein at least one plate (70) covers at least one area of the two areas.

3. Medium or high voltage switchgear panel according to claim 2, wherein a first area of the two areas is covered by at least two plates (70), wherein a first one of the at least two plates covers a first part of the first area and a second one of the at least two plates covers a second part of the first area.

4. Medium or high voltage switchgear panel according to claim 3, wherein the first one of the at least two plates covers half of the first area and the second one of the at least two plates covers the other half of the first area.

5. Medium or high voltage switchgear panel according to any of claims 2-4, wherein the at least one plate (70) comprises at least a part of a ring (72) that extends at least partially into the hole through the current transformer.

6. Medium or high voltage switchgear panel according to claim 5, wherein the at least part of the ring (72) comprises an outward facing flexible or elastic seal (73) that forms a seal with at least part of the surface of the current transformer formed by the hole.

7. Medium or high voltage switchgear panel according to any of claims 5-6, wherein the at least part of the ring (72) comprises an inward facing flexible or elastic seal (73) that forms a seal with at least part of the surface of the cable.

8. Medium or high voltage switchgear panel according to any of claims 2-7, wherein the at least one plate (70)has at least one hole (74) through which the foam or potting compound can be inserted to fill the volume (50).

9. Medium or high voltage switchgear panel according to any of claims 1-8, wherein at least one hollow tube (52) is located within the foam or potting compound, and forms at least one conduit through the foam or potting compound.

10. Medium or high voltage switchgear panel according to claim 9 when dependent on any of claims 2-7, wherein the at least one hollow tube is integrated into one or more of the at least one plate.

11. Medium or high voltage switchgear panel according to any of claims 1-10, wherein, at least one cutting wire (90) is located within the foam or potting compound that fills the at least one hole, thereby enabling the foam or potting compound to be cut.

12. Medium or high voltage switchgear panel according to claim 11, wherein both ends of each wire of the at least one the cutting wire (90) protrude out of the same end of the hole through a current transformer.

13. Medium or high voltage switchgear panel according to any of claims 1-12, wherein the at least one current transformer comprises a plurality of current transformers, and wherein at least one volume (60) between facing sides of adjacent current transformers is at least partially filled with a foam or potting compound.

14. A plate (70) for a medium or high voltage switchgear panel, wherein at least one plate is configured to cover at least one of at least two areas at opposing sides of a current transformer (40) of a medium or high voltage switchgear, wherein the at least two areas are formed when a cable (30) passes through a hole through the current transformer, and wherein the two areas are formed between the current transformer and the cable at the positions of the two opposing sides of the current transformer.

15. A method of fixing components of a medium or high voltage switchgear panel (1), the medium or high voltage switchgear panel comprising at least one cable (30) and at least one current transformer (40), wherein each cable of the at least one cable passes through at least one hole through the at least one current transformer, and wherein one cable of the at least one cable passes through the hole of a corresponding one current transformer of the at least one current transformer; and wherein the method comprises:
filling with a foam or potting compound at least one volume (50) between a surface of each cable of the at least one cable and a surface through each corresponding current transformer formed by the hole.
